(19) Europäisches Patentamt
European Patent Office
Office européen des brevets

(11) **EP 3 919 767 A1**

(12) **EUROPEAN PATENT APPLICATION**

(43) Date of publication:
**08.12.2021 Bulletin 2021/49**

(51) Int Cl.:
**F16C 19/54** (2006.01)    **F16C 19/16** (2006.01)

(21) Application number: **21177128.2**

(22) Date of filing: **01.06.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.06.2020   JP 2020096581**

(71) Applicant: **JTEKT CORPORATION
Chuo-ku,
Osaka-shi,
Osaka 542-8502 (JP)**

(72) Inventor: **SHIMOMURA, Toshiaki
Osaka-shi, 542-8502 (JP)**

(74) Representative: **Winter, Brandl - Partnerschaft
mbB
Alois-Steinecker-Straße 22
85354 Freising (DE)**

(54) **TOUCHDOWN BEARING**

(57)    A touchdown bearing (18) includes two rolling bearings (21, 22) disposed arrayed in an up-down direction. The rolling bearings (21, 22) include inner rings (31, 41) that have inner-ring raceways, outer rings (32, 42) that have outer-ring raceways, and a plurality of balls (33, 43) that are disposed between the inner-ring raceways and the outer-ring raceways, and that come into contact with the inner-ring raceways and the outer-ring raceways at contact angles. The two rolling bearings (21, 22) are laid out with the contact angles opposite to each other in the up-down direction. The contact angle of a first rolling bearing (21) out of the two rolling bearings (21, 22) is smaller than the contact angle of a second rolling bearing (22) out of the two rolling bearings (21, 22).

FIG. 3

EP 3 919 767 A1

**Description**

BACKGROUND OF THE INVENTION

1. Field of the Invention

The invention relates to a touchdown bearing.

2. Description of Related Art

Generally, a turbomolecular pump is provided with a rotor shaft having an axis of rotation arranged in the up-down direction, and rotor blades that integrally rotate with the rotor shaft. The rotor shaft is supported without physical contact by a magnetic bearing. The turbomolecular pump is further provided with a touchdown bearing to support the rotor shaft instead of the magnetic bearings when the functions of the magnetic bearing stop due to a malfunction, power outage, or the like (e.g., see Japanese Unexamined Patent Application Publication No. 2010-190400 (JP 2010-190400 A)). The rotor shaft described in JP 2010-190400 A is supported at the lower portion thereof by a touchdown bearing configured of two rolling bearings disposed arrayed in the up-down direction. Each of the rolling bearings is an angular contact ball bearing, and the two angular contact ball bearings are used duplexed face-to-face (DF).

SUMMARY OF THE INVENTION

Of the touchdown bearing described in JP 2010-190400 A, the angular contact ball bearing on the lower side receives a downward axial load from the rotor shaft falling downward under its own weight due to functions of the magnetic bearing stopping, but the upper-side angular contact ball bearing does not receive the downward axial load from the rotor shaft. Accordingly, slippage readily occurs between balls and raceways configuring the upper-side angular contact ball bearing, and there is concern that the balls and the raceways may be damaged.

The invention suppresses slippage between the balls and the raceway of a rolling bearing configuring a touchdown bearing.

An aspect of the invention is a touchdown bearing. The touchdown bearing rotatably supports a rotating shaft having an axis of rotation disposed in an up-down direction. The touchdown bearing includes two rolling bearings disposed arrayed in the up-down direction. The rolling bearings include inner rings that have inner-ring raceways, outer rings that are disposed on an outer side of the inner-ring raceways in a radial direction, and that have outer-ring raceways, and a plurality of balls that are disposed between the inner-ring raceways and the outer-ring raceways, and that come into contact with the inner-ring raceways and the outer-ring raceways at contact angles. The two rolling bearings are laid out with the contact angles opposite to each other in the up-down direction.

The contact angle of a first rolling bearing out of the two rolling bearings is smaller than the contact angle of a second rolling bearing out of the two rolling bearings. The first rolling bearing is a rolling bearing that does not receive downward axial load from the rotating shaft, and the second rolling bearing is a rolling bearing that receives the axial load.

According to the above configuration, slippage between the balls, and the inner-ring raceway and the outer-ring raceway, in the first rolling bearing that does not receive the downward axial load from the rotating shaft, can be suppressed. Accordingly, damage to the balls, and the inner-ring raceway and the outer-ring raceway, in the first rolling bearing, can be suppressed.

In the touchdown bearing, an outer diameter of the balls of the first rolling bearing may be smaller than an outer diameter of the balls of the second rolling bearing. According to this configuration, the balls in the first rolling bearing can be made lightweight, the balls can be made to rotate following rotation of the inner ring more readily, and slippage between the balls, and the inner-ring raceway and the outer-ring raceway, can be suppressed.

In the touchdown bearing, the contact angle of the first rolling bearing may be 1/4 to 1/6 of the contact angle of the second rolling bearing. According to the above configuration, the contact angle of the other rolling bearing is made to be sufficiently large and the load capacity as to the downward axial load from the rotating shaft is increased, while the contact angle of the first rolling bearing is made to be sufficiently small and slippage between the balls, and the inner-ring raceway and the outer-ring raceway, can be effectively suppressed.

With the above configuration, slippage between the balls and the raceway of a rolling bearing configuring a touchdown bearing can be suppressed.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a sectional view illustrating an example of a turbomolecular pump provided with a touchdown bearing according to an embodiment of the invention;
FIG. 2 is a sectional view illustrating a lower portion side of the turbomolecular pump enlarged;
FIG. 3 is a sectional view of the touchdown bearing; and
FIG. 4 is a sectional view of a touchdown bearing according to another embodiment.

DETAILED DESCRIPTION OF EMBODIMENTS

About Overall Configuration

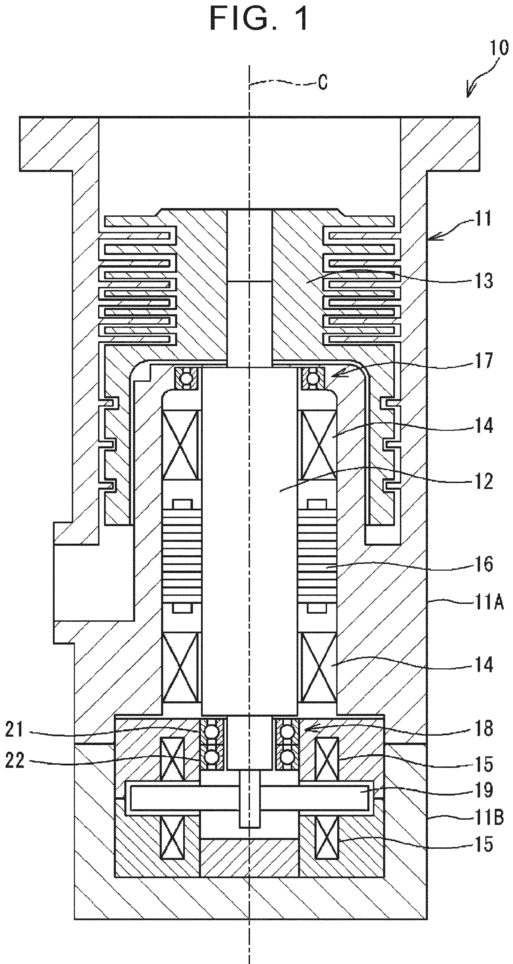

FIG. 1 is a sectional view illustrating an example of a turbomolecular pump provided with a touchdown bearing. A turbomolecular pump 10 has a housing 11, a rotor shaft (rotating shaft) 12, rotor blades 13, magnetic bearings 14 and 15, a motor 16, and touchdown bearings 17 and 18.

The housing 11 accommodates the rotor shaft 12, the rotor blades 13, the magnetic bearings 14 and 15, the motor 16, and the touchdown bearings 17 and 18. The housing 11 has an upper housing 11A and a lower housing 11B, which are linked to each other.

The rotor shaft 12 has an axis of rotation C disposed in the up-down direction. The rotor shaft 12 is rotatably supported by the magnetic bearings 14 and 15 and the touchdown bearings 17 and 18. A disc-shaped flange 19 that protrudes outwards in the radial direction is provided at the lower end portion of the rotor shaft 12. The rotor shaft 12 is linked to the rotor blades 13 so as to be integrally rotatable.

The magnetic bearings 14 and 15 have radial magnetic bearings 14 and axial magnetic bearings 15. The radial magnetic bearings 14 support the rotor shaft 12 at two positions in the up-down direction. When functioning normally, the radial magnetic bearings 14 support the rotor shaft 12 from the outer side in the radial direction without physical contact as to the rotor shaft 12. When functioning normally, the axial magnetic bearings 15 support the flange 19 of the rotor shaft 12 from both up and down sides without physical contact as to the flange 19. The motor 16 is disposed between the upper and lower radial magnetic bearings 14, and rotates the rotor shaft 12.

The touchdown bearings 17 and 18 include an upper-side touchdown bearing 17 and a lower-side touchdown bearing (touchdown bearing according to the invention) 18. The upper-side touchdown bearing 17 is configured of a rolling bearing. The upper-side touchdown bearing 17 according to the present embodiment is a deep groove ball bearing provided with an inner ring, and an outer ring, and a plurality of balls.

The lower-side touchdown bearing 18 supports the rotor shaft 12 in the up-down direction between the radial magnetic bearing 14 at the lower side and the flange 19. The lower-side touchdown bearing 18 is configured of a first rolling bearing 21 and a second rolling bearing 22. The first rolling bearing 21 and the second rolling bearing 22 are disposed arrayed in the up-down direction. The first rolling bearing 21 is disposed on the upper side of the second rolling bearing 22.

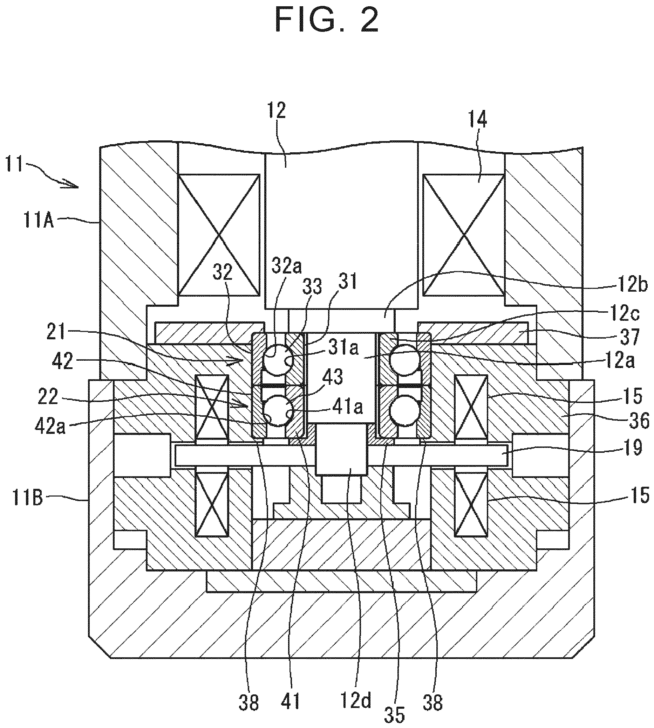

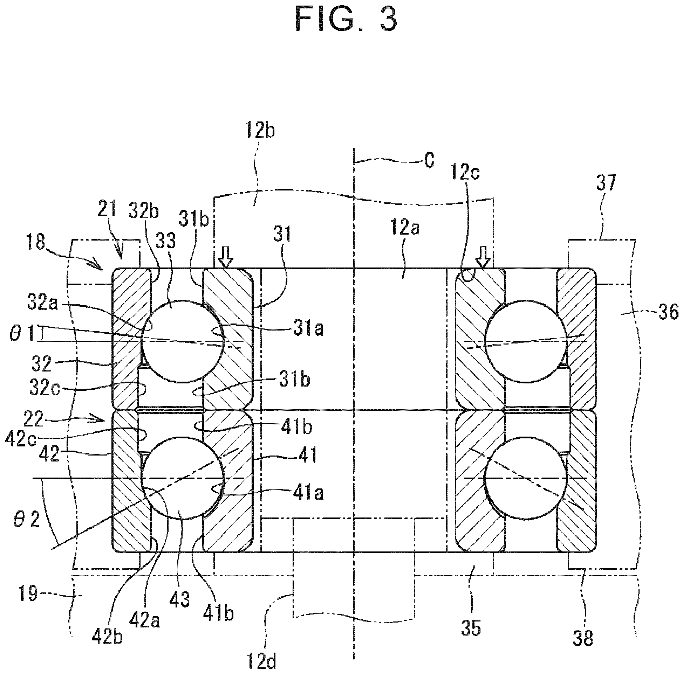

FIG. 2 is a sectional view illustrating a lower portion side of the turbomolecular pump enlarged. FIG. 3 is a sectional view of the touchdown bearing. The first rolling bearing 21 and the second rolling bearing 22 are both angular contact ball bearings. The first rolling bearing 21 has a first inner ring 31, a first outer ring 32, and first balls 33. The second rolling bearing 22 has a second inner ring 41, a second outer ring 42, and second balls 43.

Inner-ring raceways 31a and 41a are formed on the respective outer peripheral faces of the first and second inner rings 31 and 41. Inner-ring shoulder portions 31b and 41b are provided on the outer peripheral faces of the first and second inner rings 31 and 41, on both sides of the inner-ring raceways 31a and 41a in the axial direction.

Outer-ring raceways 32a and 42a are formed on the respective inner peripheral faces of the first and second outer rings 32 and 42. The outer-ring raceways 32a and 42a are disposed on the outer side of the inner-ring raceways 31a and 41a in the radial direction, facing the inner-ring raceways 31a and 41a in the radial direction. Outer-ring shoulder portions 32b and 42b are provided adjacent to one side of the outer-ring raceways 32a and 42a in the axial direction at the inner peripheral faces of the first and second outer rings 32 and 42, and counter bores 32c and 42c are formed adjacent to the other side in the axial direction. The first and second balls 33 and 43 are arrayed between the inner-ring raceways 31a and 41a and the outer-ring raceways 32a and 42a in the radial direction.

The first and second inner rings 31 and 41 and the first and second outer rings 32 and 42 are formed of stainless steels such as SUS440C (Japanese Industrial Standards) or the like, bearing steels such as SUJ2 (Japanese Industrial Standards) bearing steel or the like, or high speed tool steels such as SKH4 (Japanese Industrial Standards) high speed tool steel or the like, for example. The first and second balls 33 and 43 are formed of metal such as stainless steel or the like, or of ceramic such as silicon nitride or the like, for example. In the present embodiment, lightweight ceramic first and second balls 33 and 43 are employed. Also, the first rolling bearing 21 and the second rolling bearing 22 according to the present embodiment are full complement rolling bearings that are not provided with cages.

The first and second inner rings 31 and 41 are arrayed with a gap as to the rotor shaft 12 in the radial direction. This gap is smaller than a gap between the inner peripheral faces of the radial magnetic bearings 14 and the outer peripheral face of the rotor shaft 12. When functions of the radial magnetic bearings 14 stop due to a malfunction, power outage, or the like, i.e., in a state of abnormal operations, the first and second inner rings 31 and 41 come into contact with the rotor shaft 12 and rotate.

A supported portion 12a supported by the lower-side touchdown bearing 18 is provided to the lower portion of the rotor shaft 12. A large-diameter portion 12b that has a larger outer diameter than the outer diameter of the supported portion 12a is provided to the upper side of the supported portion 12a. A stepped portion 12c is provided between the supported portion 12a and the large-diameter portion 12b, and the upper face of the first inner ring 31 is in contact with the stepped portion 12c.

A small-diameter portion 12d that has a smaller outer diameter than the outer diameter of the supported portion 12a is provided to the lower side of the supported portion 12a. A ring-shaped first positioning member 35 is attached to this small-diameter portion 12d. The lower face of the second inner ring 41 is in contact with the first positioning member 35. Accordingly, the first inner ring 31 and the second inner ring 41 are clamped from above and below by the stepped portion 12c and the first positioning member 35, whereby the positions thereof in the direction of the axis of rotation of the rotor shaft 12 are set.

The first outer ring 32 and the second outer ring 42 are attached to part of the housing 11. The housing 11 has the upper housing 11A, and the lower housing 11B that is linked to the lower end of the upper housing 11A. The lower housing 11B has a cylindrical bearing support member 36 that supports the axial magnetic bearing 15 and the lower-side touchdown bearing 18. The outer peripheral faces of the first outer ring 32 and the second outer ring 42 are fit to the inner peripheral face of the bearing support member 36 by clearance fitting. Thus, due to the outer peripheral faces of the first and second outer rings 32 and 42 being fit to the inner peripheral face of the bearing support member 36 by clearance fitting, assembly of the first and second outer rings 32 and 42 to the bearing support member 36 is facilitated, and thermal expansion of the first and second outer rings 32 and 42 due to heat generated from the first and second inner rings 31 and 41 and the first and second balls 33 and 43 rotating can be absorbed between the first and second outer rings 32 and 42 and the bearing support member 36.

A ring-shaped second positioning member 37 is attached to the upper face of the bearing support member 36. The second positioning member 37 presses the first outer ring 32 from above. A supporting protrusion 38 that protrudes inward in the radial direction is provided to the inner peripheral face of the bearing support member 36. The supporting protrusion 38 supports the second outer ring 42 from the lower side. Accordingly, the first outer ring 32 and the second outer ring 42 are clamped from above and below by the second positioning member 37 and the supporting protrusion 38, whereby the positions thereof in the direction of the axis of rotation of the rotor shaft 12 are set.

As illustrated in FIG. 3, the first balls 33 of the first rolling bearing 21 are in contact with the first inner ring 31 and the first outer ring 32 at a first contact angle $\theta 1$. The second balls 43 of the second rolling bearing 22 are in contact with the second inner ring 41 and the second outer ring 42 at a second contact angle $\theta 2$. The first rolling bearing 21 and the second rolling bearing 22 are laid out so that the contact angles $\theta 1$ and $\theta 2$ are opposite to each other in the up-down direction. Specifically, the first outer ring 32 and the first balls 33 of the first rolling bearing 21 have the contact angle $\theta 1$ to the upper side as to the radial direction orthogonal to the axis of rotation C, and the second outer ring 42 and the second balls 43 of the second rolling bearing 22 have the contact angle $\theta 2$ to the lower side as to the radial direction orthogonal to the axis of rotation C. Accordingly, the first rolling bearing 21 and the second rolling bearing 22 according to the present embodiment are arrayed in a so-called duplexed face-to-face relation.

When the functions of the radial magnetic bearings 14 and the axial magnetic bearings 15 stop due to a malfunction, power outage, or the like, i.e., in a state of abnormal operations, the rotor shaft 12 falls downward under its own weight. At this time, a downward axial load is applied to the lower-side touchdown bearing 18 (indicated by outline arrows in FIG. 3), and the second rolling bearing 22 receives this axial load. Accordingly, the second balls 43 of the second rolling bearing 22, and the second inner ring 41 and the second outer ring 42 are in strong contact, and hardly any slippage occurs therebetween. As opposite to this, the first rolling bearing 21 does not receive the downward axial load, and accordingly the first balls 33 and the first inner ring 31 and the first outer ring 32 are not in strong contact, and slippage occurs therebetween more readily.

In the present embodiment, the first contact angle $\theta 1$ at the first rolling bearing 21 is smaller than the second contact angle $\theta 2$ at the second rolling bearing 22, and accordingly the radial load accompanying rotation of the rotor shaft 12 is more readily applied to the first rolling bearing 21 than the axial load. Accordingly, the first balls 33, and the first inner ring 31 and the first outer ring 32, can be brought into strong contact in comparison with when the first contact angle $\theta 1$ and the second contact angle $\theta 2$ are the same, and slippage occurring therebetween can be suppressed correspondingly. Thus, damage to the first balls 33, the first inner ring 31, and the first outer ring 32 can be suppressed.

The first balls 33 according to the present embodiment are formed of ceramic, and are lighter as compared to metal balls. Accordingly, the first balls 33 rotate following the first inner ring 31 more readily, and slippage between the first balls 33, and the first inner ring 31 and the first outer ring 32, can be further suppressed.

The first contact angle $\theta 1$ at the first rolling bearing 21 can be set to no less than 5° and smaller than 20°, for example. As compared to this, second contact angle $\theta 2$ at the second rolling bearing 22 can be set to no less than 20° and no more than 30°. For example, when the first contact angle $\theta 1$ is 5°, the second contact angle $\theta 2$ can be set to no less than 20° and no more than 30°. In this case, the first contact angle $\theta 1$ has the relation of the following Expression (1) as to the second contact angle $\theta 2$.

$$\theta 2/6 \leq \theta 1 \leq \theta 2/4 \qquad \ldots (1)$$

By setting the first and second contact angles $\theta 1$ and $\theta 2$ according to the relation shown in Expression (1), the load performance of downward axial load from the rotor shaft 12 at the second rolling bearing 22 can be improved, and slippage between the first balls 33 in the first rolling bearing 21, and the first inner ring 31 and the first outer ring 32, can be effectively suppressed.

Other Embodiments

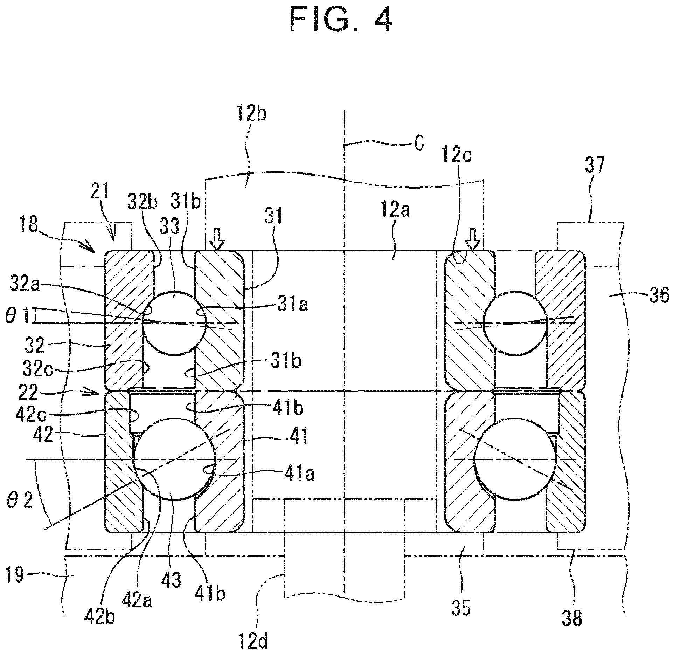

FIG. 4 is a sectional view of a touchdown bearing according to another embodiment. In the lower-side touchdown bearing 18 in the present embodiment, the diameter of the first balls 33 of the first rolling bearing 21 is smaller than that of the second balls 43 of the second rolling bearing 22. Other configurations are the same as those of the above embodiment.

In the present embodiment, the first balls 33 are smaller in diameter than the second balls 43, and are formed more lightweight. Accordingly, the first balls 33 can be made to rotate following the first inner ring 31 more readily, and slippage between the first balls 33, and the first inner ring 31 and the first outer ring 32, can be suppressed.

The embodiments disclosed herein are exemplary in all points, and are not limiting. The scope of the invention is not limited to the above-described embodiments, and encompasses all modification within a range equivalent to configurations set forth in the Claims.

For example, although the first rolling bearing 21 of the lower-side touchdown bearing 18 has been described as being an angular contact ball bearing in which the counter bore 32c is formed in the first outer ring 32, this may be a deep groove ball bearing in which the first balls 33 come into contact with the inner-ring raceway 31a and the outer-ring raceway 32a with a contact angle.

The first rolling bearing 21 and the second rolling bearing 22 of the lower-side touchdown bearing 18 may be used duplexed back-to-back. In this case, the contact angle of the second rolling bearing 22 at the lower side, which does not receive the axial load from the rotor shaft 12, may be made to be smaller than the contact angle of the first rolling bearing 21 at the upper side, which receives the axial load from the rotor shaft 12.

## Claims

1. A touchdown bearing (18) that rotatably supports a rotating shaft having an axis of rotation disposed in an up-down direction, the touchdown bearing (18) **characterized by** comprising two rolling bearings (21, 22) disposed arrayed in the up-down direction, wherein
the rolling bearings (21, 22) include inner rings (31, 41) that have inner-ring raceways, outer rings (32, 42) that are disposed on an outer side of the inner-ring raceways in a radial direction, and that have outer-ring raceways, and a plurality of balls (33, 43) that are disposed between the inner-ring raceways and the outer-ring raceways, and that come into contact with the inner-ring raceways and the outer-ring raceways at contact angles,
the two rolling bearings (21, 22) are laid out with the contact angles opposite to each other in the up-down direction, and
the contact angle of a first rolling bearing (21) out of the two rolling bearings (21, 22) is smaller than the contact angle of a second rolling bearing (22) out of the two rolling bearings (21, 22), the first rolling bearing (21) is a rolling bearing that does not receive downward axial load from the rotating shaft, and the second rolling bearing (22) is a rolling bearing that receives the axial load.

2. The touchdown bearing (18) according to claim 1, **characterized in that** an outer diameter of the balls (33) of the first rolling bearing (21) is smaller than an outer diameter of the balls (43) of the second rolling bearing (22).

3. The touchdown bearing (18) according to claim 1 or 2, **characterized in that** the contact angle of the first rolling bearing (21) is 1/4 to 1/6 of the contact angle of the second rolling bearing (22).

# FIG. 1

# FIG. 2

# FIG. 3

# FIG. 4

Europäisches
Patentamt

European
Patent Office

Office européen
des brevets

# EUROPEAN SEARCH REPORT

Application Number

EP 21 17 7128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H07 238926 A (NIPPON SEIKO KK) 12 September 1995 (1995-09-12) * figure 13 * * paragraph [0062] * * The references cited refer to the annexed automated translation of this document. * | 1-3 | INV. F16C19/54 F16C19/16 |
| X | DE 10 2013 203981 A1 (SKF AB [SE]) 11 September 2014 (2014-09-11) * figure 1 * * paragraph [0016] * | 1,3 | |
| X | DE 43 05 289 A1 (SKF USA INC [US]) 2 September 1993 (1993-09-02) * figure 9 * | 1,3 | |

TECHNICAL FIELDS
SEARCHED (IPC)

F16C

The present search report has been drawn up for all claims

| Place of search | Date of completion of the search | Examiner |
|---|---|---|
| The Hague | 30 September 2021 | Frechard, Fabrice |

**EP 3 919 767 A1**

## ANNEX TO THE EUROPEAN SEARCH REPORT
## ON EUROPEAN PATENT APPLICATION NO.

EP 21 17 7128

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2021

| Patent document cited in search report | Publication date | Patent family member(s) | Publication date |
|---|---|---|---|
| JP H07238926 A | 12-09-1995 | JP 3252587 B2<br>JP H07238926 A | 04-02-2002<br>12-09-1995 |
| DE 102013203981 A1 | 11-09-2014 | NONE | |
| DE 4305289 A1 | 02-09-1993 | DE 4305289 A1<br>JP 3007493 B2<br>JP H05280482 A | 02-09-1993<br>07-02-2000<br>26-10-1993 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010190400 A